# EUROPÄISCHE PATENTSCHRIFT

(11) **EP 1 943 090 B1**
(45) Veröffentlichungstag und Bekanntmachung des Hinweises auf die Patenterteilung: **03.08.2011**
(21) Anmeldenummer: 06791952.2
(22) Anmeldetag: 09.09.2006
(51) Int. Cl.: B29D 30/16, B29D 30/30, B29D 30/60

(54) **VORRICHTUNG ZUM ZUFÜHREN UND ANDRÜCKEN VON KAUTSCHUKMATERIAL ZUM AUFBAU EINER REIFENAUFBAUSCHICHT**
DEVICE FOR GUIDING AND PRESSING RUBBER FOR CONSTRUCTING A TYRE CONSTRUCTION LAYER
DISPOSITIF D'ACHEMINEMENT ET DE PRESSAGE DE CAOUTCHOUC POUR CONSTRUIRE UNE COUCHE DE CONSTRUCTION DE PNEU

(30) Priorität: 27.09.2005 DE 102005046116
(43) Veröffentlichungstag der Anmeldung: 16.07.2008
(73) Patentinhaber: Continental Reifen Deutschland GmbH, 30165 Hannover (DE)
(72) Erfinder: GEFFERT, Ulrich, 31848 Bad Münder (DE); KASTENS, Sven, 30890 Barsingshausen (DE)
(74) Vertreter: Finger, Karsten
(86) Internationale Anmeldenummer: PCT/EP2006/008803
(87) Internationale Veröffentlichungsnummer: WO 2007/036295

(56) Entgegenhaltungen:
- EP-A- 1 647 394
- EP-A2- 1 033 236
- LU-A1- 87 565
- US-A- 3 833 437
- US-A- 4 457 802

## Beschreibung

Die Erfindung betrifft eine Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper, mit einer Ausformungseinrichtung zur Profilierung des durch die Ausformungseinrichtung geförderten Kautschukmaterials.

Aus der EP1094930B1 ist es bekannt, ein extrudiertes Rundschnurkautschukmaterial kontinuierlich in einem Spulkopf einem Kalander zur Ausformung zuzuführen und das ausgeformte, streifenförmige Kautschukmaterial über eine Andrückrolle auf einen auf einem Zapfen aufgebauten Reifenrohling zur Ausformung einer Seitenwand schraubenförmig aufzuspulen. Das Kautschukmaterial wird bei Anwendung eines solchen Verfahrens entsprechend der gewünschten Länge des aufzuspulenden Streifens abgelängt. Mittels der Andrückrolle kann der auf dem Zapfen aufgebaute Rohling von der zum Zapfenende hin freien unbebauten Zapfenseite auch die Seitenwand des Reifenrohlings wegen der guten Zugänglichkeit sicher mit Kautschukmaterial belegen. Zum Bespulen der anderen Seitenwand über deren gesamten Erstreckungsbereich kann der Reifenrohling im Anschluss auf dem Zapfen seitenverkehrt aufgespannt werden, um auch hier von der frei zugänglichen Seite den gesamten Erstreckungsbereich der Seitenwand mittels der Andrückrolle belegen zu können. Dies erfordert jedoch jeweils ein Unterbrechen des Bespulens, ein Ausspannen des Reifenrohlings, ein Umdrehen und ein neues exakt Einspannen.

Eine ähnliche Vorrichtung ist auch aus der EP 1 033 236-A bekannt.

Auf herkömmlichen Aufbautrommeln zum Aufbau eines Reifens, bei denen der Zugang zum Reifenrohling von beiden Seiten durch baulich und funktionsbedingte Vorrichtungen der Aufbautrommel erschwert ist, ist der Zugang zum Bespulen mittels derartiger Spulvorrichtungen mit Andrückrolle erschwert, so dass insbesondere die im Wulstbereich des Reifenrohlings befindlichen Bespulungsbereich nur erschwert mit zusätzlichen Maßnahmen - z.B. zusätzliche Veränderungen der Aufbautrommel - , wenn überhaupt bespult werden können.

Der Erfindung liegt daher die Aufgabe zugrunde eine Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper, mit einer Ausformungseinrichtung zur Profilierung des durch die Ausformungseinrichtung geförderten Kautschukmaterials zu schaffen mit der das Bespulen besonders einfach und dennoch zuverlässig ermöglicht wird.

Erfindungsgemäß gelöst wird die Aufgabe durch die Ausbildung einer Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper gemäß den Merkmalen von Anspruch 1 gelöst, mit einer Ausformungseinrichtung zur Profilierung des durch die Ausformungseinrichtung geförderten Kautschukmaterials und mit einem der Ausformungseinrichtung in Förderrichtung des profilierten Kautschukmaterials nachgeordneten um einen ersten um eine Drehachse drehbar gelagerten - insbesondere rotationssymetrischen - Umlenkkörper und um einen um einen zweiten drehbar gelagerten - insbesondere rotationssymetrischen - Umlenkkörper umlaufend geführten Endlosband zur Förderung des profilierten Kautschukmaterials aus Richtung des ersten Umlenkkörpers in Richtung des zweiten Umlenkkörpers und zum Auflegen und zum Andrücken auf den rotatorisch antreibbaren Aufbaukörper im Umlenkbereich des zweiten Umlenkkörpers, wobei die Drehachse des zweiten Umlenkkörpers in ihrer Ausrichtung gegenüber der Drehachse des ersten Umlenkkörpers gesteuert veränderbar ausgebildet ist.

Das umlaufend geführte Endlosband ermöglicht die Förderung des Kautschukmaterials von der Ausformeinrichtung auch in enger zugebaute, schwer zugängliche Bereiche, wobei jeweils durch gesteuerte Veränderung der Drehachse des zweiten Umlenkkörpers dieser zweite Umlenkkörper und damit das geführte Endlosband jeweils im unmittelbaren Bereich des Auflegens des Kautschukmaterial auf den zum Aufspulen rotatorisch verdrehten Aufkörper an die zu bepulende Oberfläche und den Auflegeprozess optimiert angepasst werden kann. Das Kautschukmaterial kann somit in einfacher Weise auch in schwer zugänglichen Bereichen weiterhin über den vom zweiten Umlenkkörper über das Endlosband ausgeübten Druck unter leichtem Druck und durch optimierte Ausrichtung im unmittelbaren Auflegebereich zuverlässig aufgespult werden.

Besonders vorteilhaft ist die Ausbildung einer Vorrichtung gemäß den Merkmalen von Anspruch 2, wobei das umlaufend geführte Endlosband zwischen erster und zweiter Umlenkrolle ein oberes und ein unteres Trumm aufweist, wobei das obere Trumm als Fördertrumm zur Förderung des profilierten Kautschukmaterials zum zweiten Umlenkkörper und zum Aufbaukörper ausgebildet ist.

Besonders vorteilhaft ist die Ausbildung einer Vorrichtung gemäß den Merkmalen von Anspruch 3, wobei die Ausformeinrichtung oberhalb des umlaufend ausgebildeten Endlosbandes ausgebildet ist.

Besonders vorteilhaft ist die Ausbildung einer Vorrichtung gemäß den Merkmalen von Anspruch 4, mit einer steuerbaren Antriebseinheit und mit einer zumindest zur Förderung herstellbaren Antriebsverbindung zwischen Antriebseinheit und erstem Umlenkkörper zum gesteuerten Verdrehen des ersten Umlenkkörpers um seine Achse zum Antreiben des umlaufenden Endlosbandes um die beiden Umlenkkörper über Mitnahmekontakt zwischen erstem Umlenkkörper und umlaufendem Endlosband.

Besonders vorteilhaft ist die Ausbildung einer Vorrichtung gemäß den Merkmalen von Anspruch 5, wobei zum wahlweisen Zuführen und Andrücken von bandförmigem oder streifenförmigem profiliertem Kautschukmaterial von unterschiedlichen Seiten zu einem oder mehreren jeweils um einen rotatorisch antreibbaren Aufbaukörper zum Aufbau jeweils einer Reifenaufbauschicht auf dem Aufbaukörper das umlaufende Endlosband mit seiner Förderfläche von dem ersten Umlenkkörper in Richtung eines in einer ersten Förderrichtung angeordneten zweiten Umlenkkörpers oder in Richtung eines in einer zweiten Förderrichtung angeordneten zweiten Umlenkkörpers gesteuert antreibbar ausgebildet ist.

Besonders vorteilhaft ist die Ausbildung einer Vorrichtung gemäß den Merkmalen von Anspruch 6, wobei zum wahlweisen Zuführen und Andrücken von bandförmigem oder streifenförmigem profiliertem Kautschukmaterial von unterschiedlichen Seiten zu einem oder zu mehreren jeweils um einen rotatorisch antreibbaren Aufbaukörper zum Aufbau jeweils einer Reifenaufbauschicht auf dem Aufbaukörper der zweite Umlenkkörper aus einer ersten Position zum Zuführen und Andrücken von bandförmigem streifenförmigem profiliertem Kautschukmaterial von einer ersten Seite in eine zweite Position zum Zuführen und Andrücken von bandförmigem streifenförmigem profiliertem Kautschukmaterial von einer zweiten Seite und zurück - insbesondere gesteuert - verstellbar ist.

Besonders vorteilhaft ist die Ausbildung einer Vorrichtung gemäß den Merkmalen von Anspruch 7, wobei zum wahlweisen Zuführen und Andrücken von bandförmigem oder streifenförmigem profiliertem Kautschukmaterial von unterschiedlichen Seiten zu einem oder zu mehreren jeweils um einen rotatorisch antreibbaren Aufbaukörper zum Aufbau jeweils einer Reifenaufbauschicht auf dem Aufbaukörper ein erster zweiter Umlenkkörper in einer Position zum Zuführen und Andrücken von bandförmigem streifenförmigem profiliertem Kautschukmaterial von einer ersten Seite und ein zweiter zweiter Umlenkkörper in einer Position zum Zuführen und Andrücken von bandförmigem streifenförmigem profiliertem Kautschukmaterial von einer zweiten Seite drehbar gelagert und jeweils in seiner Drehachse gegenüber der Drehachse des ersten Umlenkkörpers veränderbar ausgebildet ist, wobei das umlaufende Enlosband um den ersten Umlenkkörper und sowohl um den ersten zweiten und um den zweiten zweiten Umlenkkörper geführt ausgebildet ist.

Besonders vorteilhaft ist die Ausbildung einer Vorrichtung gemäß den Merkmalen von Anspruch 8, wobei die Ausformeinrichtung ein Formkalander ist.

Besonders vorteilhaft ist die Ausbildung einer Vorrichtung gemäß den Merkmalen von Anspruch 9, wobei der Ausformeinrichtung in Förderrichtung vorgeordnet eine Herstellungseinrichtung -insbesondere eine Extrudereinrichtung - zur Erzeugung von bandförmigem Kautschukmaterial vorgeordnet ist.

Besonders vorteilhaft ist die Ausbildung einer Vorrichtung gemäß den Merkmalen von Anspruch 10, wobei der Ausformeinrichtung in Förderrichtung vorgeordnet eine steuerbare Ablängeinrichtung zur gesteuerten Ablängung der zum Auflegen erforderlichen Band- oder Streifenlängen des Kautschukmaterials ausgeboldet ist.

Besonders vorteilhaft ist die Ausbildung einer Vorrichtung gemäß den Merkmalen von Anspruch 11, mit Mitteln zum gesteuerten Heranführen - insbesondere durch Verschieben - der Vorrichtung in Betriebsposition am Aufbaukörper und zum gesteuerten Entfernen - insbesondere durch Verschieben - der Vorrichtung aus der Betriebsposition in eine Ruheposition entfernt vom Aufbaukörper.

Die Erfindung wird im Folgenden an Hand der in den Figuren 1 bis 7 dargestellten Ausführungsbeispiele näher erläutert. Darin zeigen:
- Fig.1: Schematische Darstellung einer Station zur Bespulung eines Reifenrohlings mit streifenförmigem Kautschukmaterial mit auf einer Trommel aufgebautem Reifenrohling und einem Spulkopf,
- Fig. 2: Schematische Schnittdarstellung des Spulkopfs,
- Fig. 3: Fig. 3a bis Fig.3c schematische Darstellung gemäß Ansicht A-A von Fig. 2 und Fig. 3d schematische Darstellung gemäß Ansicht B-b von Fig. 2 zur Erläuterung der Drehachsenverstellung mit in den in Fig.3a, Fig.3b und Fig.3c unterschiedlichen Einstellungen,
- Fig. 4: Vereinfachte schematische Darstellung des Spulkopfes mit in Fig. 4a bis Fig. 4g dargestellten Verfahrensschritten zur Erläuterung der Zufuhr und des Ablängens von Kautschukmaterial,
- Fig. 5: Darstellung des Aufspulprozesses eines Kautschukstreifens zur Erzeugung einer Reifenseitenwand,
- Fig. 6: Darstellung des Aufspulprozesses eines Kautschukstreifens zur Erzeugung eines Laufstreifens,
- Fig. 7: Darstellung alternativer Ausführungen in Fig.7a und Fig.7b.

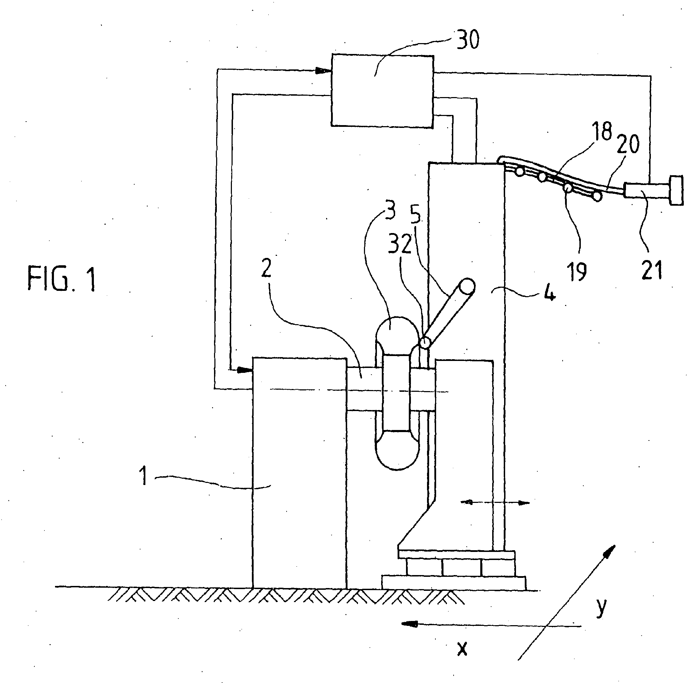

Fig. 1 zeigt einen Reifenrohling, der in herkömmlicher Weise auf einer in einem Gestell 1 drehbar gelagerten und über eine Steuereinheit 30 rotatorisch gesteuert angetriebenen Aufbautrommel 2 koaxial zur Aufbautrommel 2 aufgebaut und befestigt ist.

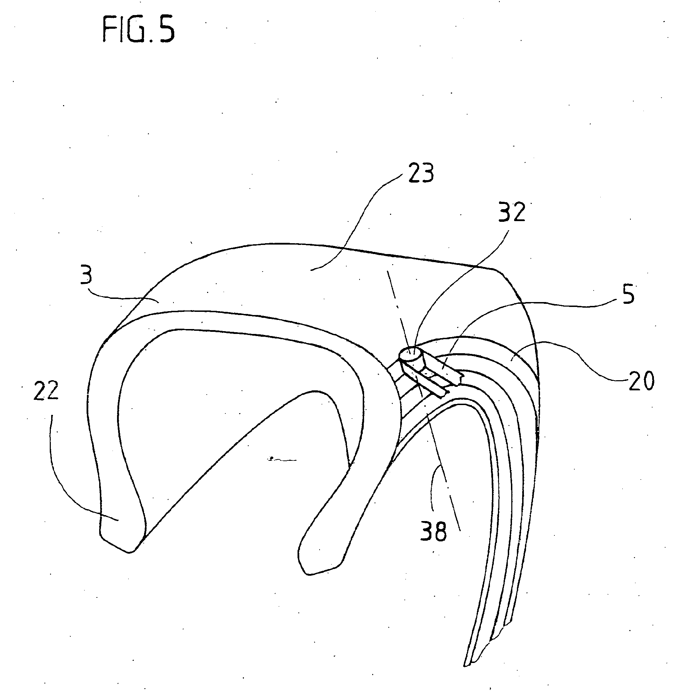

Der Reifenrohling besteht - wie in Fig. 5 dargestellt - aus einer in herkömmlicher Weise ausgebildeten Karkasse 3 aus einer oder mehreren nicht dargestellten Lagen von in Kautschuk eingebetteten Festigkeitsträgern, die sich von Wulstbereich 22 zu Wulstbereich 22 des Reifenrohlings axial erstrecken. Der Reifenrohling ist torusförmig ausgebildet und auf der Reifenaufbautrommel 2 befestigt.

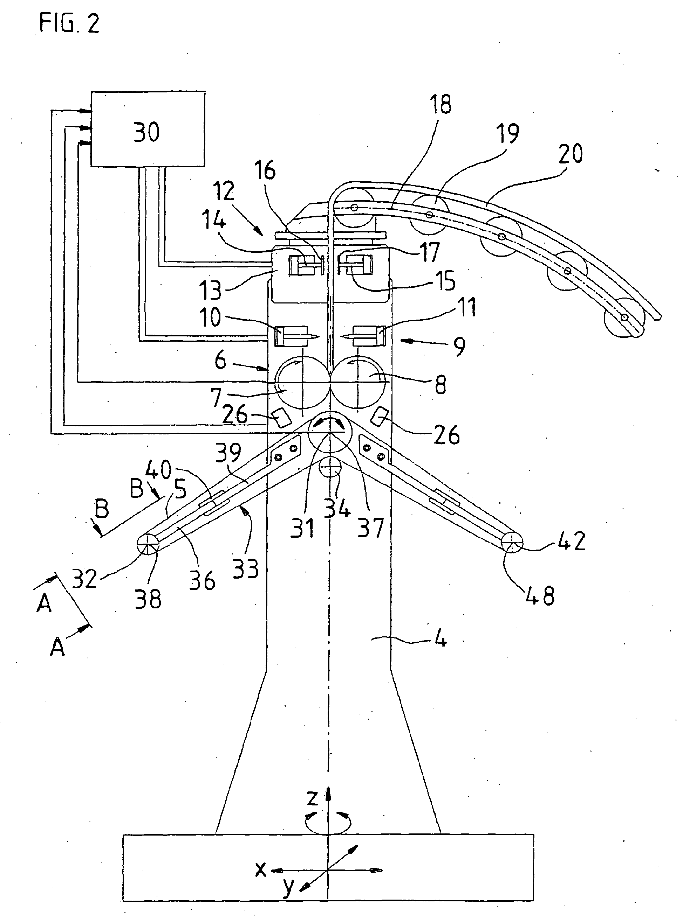

In Fig. 1 und Fig. 2 ist darüber hinaus ein Spulkopf 4 dargestellt. Aus einem Extruder 21 bekannter Art wird rundschnurförmiges oder bandförmiges Kautschukmaterial 20 über einen am Spulkopf 4 befestigten Rollenträger mit in Förderrichtung hintereinander in einem Gestell 18 des Rollenträgers drehbar gelagerten Förderrollen 19, und im Anschluss daran zwischen zwei Halteplatten 16 und 17 hindurch, die jeweils an einem Hubkolben 14 bzw. 15 eines pneumatisch oder hydraulisch betätigbaren und von der Steuereinheit 30 gesteuert betätigten Hubkolbenzylinders in einem im Spulkopf 4 verschiebbar gelagerten Rahmen 13 befestigt sind, im Anschluss daran zwischen zwei jeweils an einem hydraulisch oder pneumatisch betätigbaren und von der Steuereinheit 30 gesteuert betätigten mit jeweils einem Hubkolbenmesser 10 bzw. 11 versehenen Hubkolben eines Hubkolbenzylinders einer Schneideeinrichtung 9 hindurch und zwischen zwei in Förderrichtung nachgeordneten zusammenwirkenden gesteuert von der Steuereinrichtung 30 rotatorisch angetriebenen Kalanderwalzen 7 und 8 eines Formkalanders 6 von den Kalanderwalzen hindurch gezogen auf ein nachgeordnetes Auflegeband 5 weitergefördert werden. Über das Auflegeband 5 wird das von den profilierten Kalanderwalzen 6 und 7 des Formkalanders 6 ausgeformte bandförmige Material - wie in Fig. 1 und Fig. 5 zu erkennen ist - zwischen Wulstbereich 22 und Lauffläche des zu fertigenden Reifens auf die Karkasse des Reifenrohlings unter Druck aufgerollt.

Hierzu wird zunächst der Spulkopf 4 in die parallel zur Rotationsachse der Reifenaufbautrommel 2 in den Figuren 1 und 2 dargestellte x-Richtung soweit verschoben, dass das Auflegeband 5 in Berührkontakt mit dem Reifenrohling gerät. Durch von der Steuereinheit 30 gesteuertes, stufenloses Verschieben über eine nicht dargestellte bekannte Verschiebeeinrichtung in die Koordinatenrichtung x parallel zur Rotationsachse der Reifenaufbautrommel 2 und die Koordinatenrichtung y senkrecht zur Rotationsachse der Reifenaufbautrommel 2 kann dabei der Spulkopf 4 jeweils so positioniert werden, dass das Auflegeband 5 mit gewünschtem Druck im Berührkontakt zum Reifenrohling 3 steht. Darüber hinaus ist - wie in Fig. 2 dargestellt ist - der Spulkopf 4 in bekannter nicht dargestellter Weise um eine senkrecht zur x-y-Ebene ausgerichtete Achse z stufenlos gesteuert schwenkbar, so dass über die Steuereinheit 30 der Spulkopf 4 jeweils so positioniert wird, dass das Auflegeband 5 jeweils an die zum Aufspulen gewünschte Oberflächenposition des Reifenrohlings herangeschwenkt werden kann.

Hierdurch wird - wie in Fig. 5 dargestellt ist - während der gesteuerten Rotation des Reifenrohlings um die Rotationsachse der Reifenaufbautrommel 2 das durch die Kalanderwalzen 7 und 8 ausgeformte Kautschukmaterial 20 von radial innen nach radial außen kontinuierlich auf die Karkasse aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kotinuierlich das Auflegeband 5 in seiner Förderrichtung an die jeweils zu belegende Oberfläche der Kontur des torusförmigen Reifenrohlings durch gesteuertes Schwenken des Spulkopfs 4 um die z-Achse nachgestellt.

Bei Erfordernis wird in einer nicht dargestellten Ausführung zusätzlich das Auflegeband 5 in z-Richtung stufenlos gesteuert verschiebbar ausgebildet. Bei einer derartigen Ausführung kann auch die Aufspulposition des Auflegebands 5 gegenüber dem Reifenrohling in z-Richtung individuell gesteuert eingestellt oder während des Spulens verändert werden.

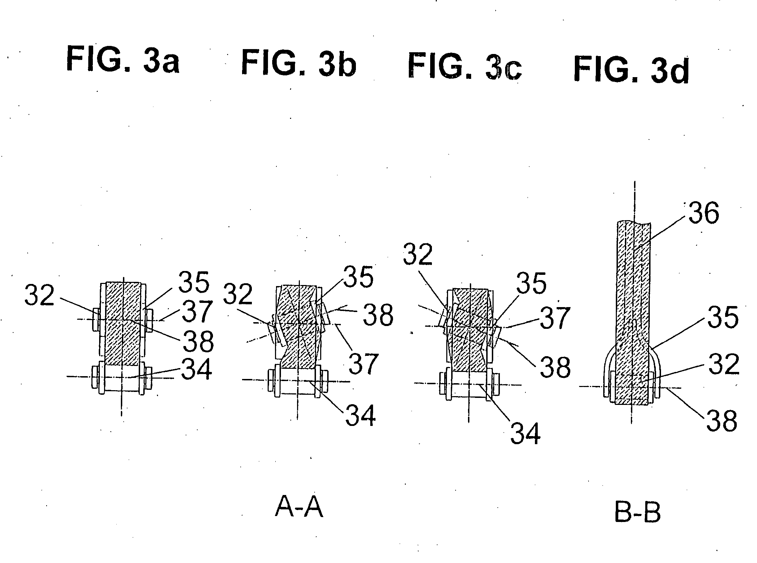

Das Auflegeband 5 ist ein - wie in Fig. 2 und Fig. 3a bis 3d dargestellt - ein um eine erste Umlenkrolle 31 und um eine zweite Umlenkrolle 32 umlaufend geführtes endloses Förderband. Die Umlenkrolle 31 ist um eine Drehachse 37 drehbar im Gestell 4 gelagert und steht über einen nicht dargestellten Zahnradantrieb in bekannter Weise mit einem von der Steuereinheit 30 gesteuerten Antriebsmotor in Antriebsverbindung. Im Gestell 4 ist eine stangenförmige Haltetraverse 39 befestigt, die sich in radialer Richtung der Umlenkrolle 31 außerhalb der Umlenkrolle 31 von der Umlenkrolle 31 wegweisend aus dem Gestell 4 heraus mit einer Neigung nach unten erstreckt. In dem von der Umlenkrolle 31 wegweisenden Ende der stangenförmigen Haltetraverse 39 ist in Verlängerung der stangenförmigen Haltetraverse 39 eine Welle 36 um ihre Drehachse drehbar gelagert. Mittels eines Verstellmechanismus 40 bekannter Art, der mit der Steuereinheit 30 in Verbindung steht kann die Welle 36 gesteuert um ihre Drehachse verdreht werden. Der Verstellmechanismus 40 ist beispielsweise ein Servomotor oder ein Schrittmotor mit Getriebe bekannter Art. An dem von der stangenförmigen Haltetraverse 39 wegweisenden Ende der Welle 36 ist die Welle 36 als Haltegabel 35 ausgebildet. In den beiden Schenkeln der Haltegabel 35 ist eine zweite Umlenkrolle 32 um eine Drehachse 38 drehbar gelagert. Die Drehachse 38 liegt in einer zur Drehachse 37 der ersten Umlenkrolle 31 parallelen Ebene. Das Auflegeband 5 ist um die erste und um die zweite Umlenkrolle herum geführt und erstreckt sich mit ihrem oberen Trumm zwischen erster Umlenkrolle 31 und zweiter Umlenkrolle 32 und mit ihrem unteren Trumm wieder zurück zwischen zweiter Umlenkrolle 32 und erster Umlenkrolle 31. Durch Verdrehen der Welle 36 wird die Drehachse 33 der zweiten Umlenkrolle 32 in dieser Ebene und somit die das Kautschukmaterial auf dem Reifenrohling auflegende Kontaktfläche des Auflegebandes 5 verdreht. Fig. 3a zeigt die Einstellung, bei der die Drehachse 38 der zweiten Umlenkrolle 32 parallel zur Drehachse 37 der ersten Umlenkrolle 31 ausgerichtet ist. Fig. 3b und Fig. 3c zeigen jeweils eine Einstellung, bei der die Drehachse 38 der zweiten Umlenkrolle 32 innerhalb einer parallel zur Drehachse 37 der ersten Umlenkrolle 31 ausgerichteten Ebene gegenüber der in Figur 3 a dargestellten Ausgangslage jeweils in unterschiedliche Richtung unter Einnahme eine Schnittwinkels zur Ebene gesteuert verdreht ist.

Auf diese Weise wird die zweite Umlenkrolle 32 derart gesteuert in ihrem Schnittwinkel und somit ihrer Lage zur ersten Umlenkrolle 31 eingestellt, dass das über das obere Trumm des Förderbandes 5 geförderte, ausgeformte Kautschukmaterial mit seiner Oberfläche parallel zur Oberfläche des torusförmigen Reifenrohlings im Bereich des Andrückkontaktes ausgerichtet ist und in dieser parallelen Ausichtung aufgelegt und von der zweiten Umlenkrolle 32 und das Auflegeband 5 angedrückt wird.

Es kann zum Teil sinnvoll sein gezielt auch einen Verschränkungswinkel beim Auflegen zwischen Oberfläche des geförderten, ausgeformten Kautschukmaterials und Oberfläche des torusförmigen Reifenrohlings im Bereich des Andrückkontaktes einzustellen. Zum Teil kann es auch sinnvoll sein, diesen Verschränkungswinkel während des Aufspulens gezielt zu verändern. So kann es zum Beispiel sinnvoll sein, während des Aufpulens eines Seitenwandkautschukmaterials zum Herstellen einer Reifenseitenwand im Wulstbereich der Reifenseitenwand einen größeren Verschränkungswinkel als im Reifenschulterbereich der Seitenwand einzustellen. Die gezielte Einstellung oder Veränderung des Verschränkungswinkels zwischen Oberfläche des geförderten, ausgeformten Kautschukmaterials und Oberfläche des torusförmigen Reifenrohlings im Bereich des Andrückkontaktes wird hierzu ebenfalls durch eine gesteuerte Veränderung des Schnittwinkels der Drehachse 38 der ersten zweiten Umlenkrolle 32 bzw. der Drehachse der zweiten zweiten Umlenkrolle 42und somit ihrer Lage zur ersten Umlenkrolle 31 bewirkt.

Sobald das zwischen den Hubkolbenmessern 10 und 11 hindurch gezogene rundschnurförmige oder bandförmige Kautschukmaterial eine derartige Länge erreicht hat, dass es der für die Herstellung der Seitenwand des Reifenrohlings gewünschten Aufspullänge entspricht, wird durch Steuereinheit 30 ein Schneideprozess ausgelöst. Hierzu werden die Hubkolben der Hubkolbenmesser10 und 11 pneumatisch bzw. hydraulisch im jeweiligen Hubkolbenzylinder auf einander zu verschoben und hierdurch das rundschnurförmige bzw. bandförmige Kautschukmaterial durch die von beiden Seiten einwirkenden Hubkolbenmesser 10 und 11 zerschnitten.

Sobald das durch den Schneideprozess erzeugte Ende des abgeschnittenen Kautschukstreifens von dem Auflegeband 5 auf die Seitenwand des Reifenrohlings aufgedrückt wurde, wird der Spulkopf durch gesteuertes Verschieben in der x-y-Ebene vom Reifenrohling entfernt.

Zum Bespulen einer neuen Reifenseitenwand wird in herkömmlicher Weise ein neuer torusförmiger Reifenrohling auf der Reifenaufbautrommel 2 aufgebaut und der Spulkopf 4 wiederum gesteuert an den Reifenrohling soweit herangeführt, dass der Spulprozess zum Aufbau der Reifenseitenwand eingeleitet werden kann.

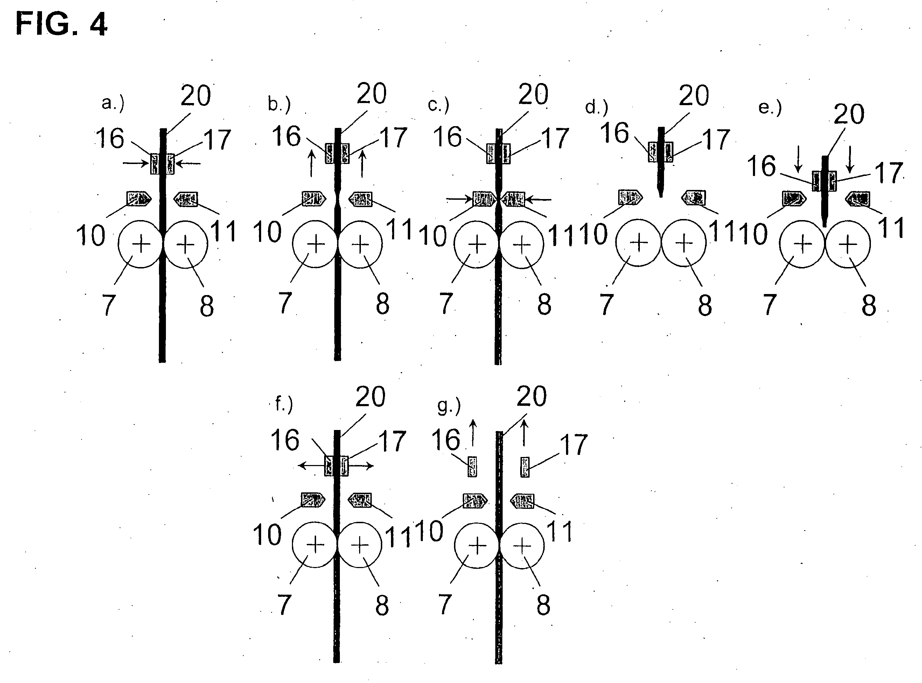

Zum Einführen des Anfangs eines vom Extruder neu erzeugten rundschnurförmigen oder bandförmigen Kautschukstranges zwischen die Kalanderwalzen 7 und 8 werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Förderrichtung auf die Kalanderwalzen 7 und 8 des Formkalanders 6 zu bewegt, so dass das Kautschukbandes 20 zwischen den Kalanderwalzen 7 und 8 eingeführt und von den Kalanderwalzen 7 und 8 durch den in den Kalanderspalt zwischen den Kalanderwalzen 7 und 8 eingezogen wird. Dieser Zustand ist in Fig. 4a dargestellt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition abgehoben.

Zum Schneiden werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Fördergeschwindigkeit der Kalanderwalzen 7 und 8 in Förderrichtung auf die Kalanderwalzen 7 und 8 des Formkalanders 6 zu bewegt, so dass das Kautschukbandes 20 in Richtung des zwischen den Kalanderwalzen 7 und 8 gebildeten Kalanderspaltes geführt wird, wobei das Kautschukband 20 weiterhin von den Kalanderwalzen 7 und 8 durch den in den Kalanderspalt zwischen den Kalanderwalzen 7 und 8 eingezogen wird. Dieser Zustand ist in Fig. 3a dargestellt. Danach wird der Rahmen 13 wieder in Gegenförderrichtung gesteuert zurückbewegt. Das zwischen den Halteplatten 16 und 17 und zwischen den Kalanderwalzen 7 und 8 jeweils eingespannte Kautschukband 20 wird hierdurch zwischen den beiden Einspannpositionen gedehnt. Hierdurch entsteht eine Einschnürung des Kautschukbandes 20. Die Position der Hubkolbenmesser 10 und 11 im Spulkopf 4 ist dabei so gewählt, dass diese im Bereich des erwarteten dünnsten Querschnitts des gedehnten Materials positioniert sind. Dies ist in Fig. 4b dargestellt. Danach werden - wie in Fig. 4c zu erkennen ist - die Hubkolbenmesser 10 und 11 hydraulisch bzw. pneumatisch gesteuert aufeinander zu bewegt, so dass das Kautschukband 20 im Bereich des dünnsten Querschnitts durchtrennt wird. Das Ende des vorangegangenen Streifenmaterials wird weiter zum Reifenrohling gefördert. Wie in Fig.4d zu erkennen ist, ist auch der Anfang des nächsten Streifenmaterials verjüngt ausgebildet und wird - wie in Fig. 4e zu erkennen ist - durch Verschieben des Rahmens 13 in Förderrichtung in den Kalanderspalt zwischen die Kalanderwalzen 7 bzw. 8 eingeführt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Wie in den Figuren 4c zu erkennen, ist auch das Ende des vorangegangenen Streifens verjüngt ausgebildet. Die Verjüngung von Anfang und Ende des Kautschukstreifens ermöglichen beim Aufspulen auf die Oberfläche des Reifenrohlings am Anfang und am Ende einen gleichmäßigen Übergang zur Oberfläche des Reifenrohlings.

Zur Ermittlung der Länge des Kautschukstreifenmaterials zur richtigen Ablängung auf die aufzuspulende Länge wird in einer Ausführung die Länge aus den vorhandenen Daten über Fördergeschwindigkeit, die beispielsweise aus der Drehgeschwindigkeit der Kalanderwalzen 7 und 8 ermittelt wird oder direkt gemessen wird, und der Förderzeit ermittelt. In einer alternativen Ausführung wird - wie in Fig. 2 dargestellt - die Länge des geförderten Kautschukbandmaterials mittels im Spulkopf ausgebildeten Sensoren 31 zur Ermittlung eines Kautschukbandes bekannter Art gemessen und diese Daten an die Steuereinheit zur Verarbeitung weitergeleitet. Die Sensoren sind beispielsweise zwischen Schneideeinrichtung mit Hubschneidemessern 10 und 11 und dem Formkalander 6 mit den Kalanderwalzen 7 und 8 oder aber - wie in Fig. 2 dargestellt ist - in Förderrichtung dem Kalander angeordnet.

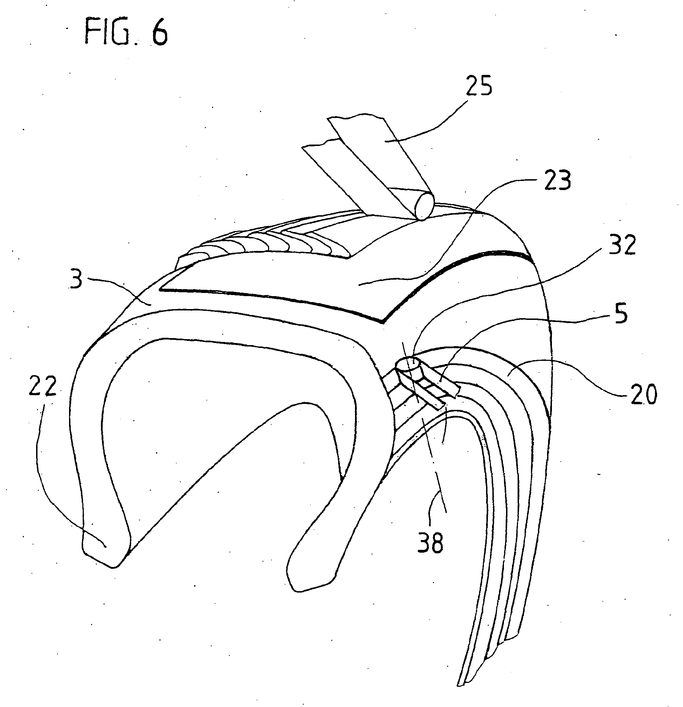

Wie in Fig. 6 dargestellt ist, wird in einer anderen Ausführung auch der Laufstreifen eines Reifens über einen - wie oben dargestellten - Spulkopf 4 aus einem in entsprechend gleicher Weise hergestellten Kautschukstreifen über ein Auflegeband 25 des Spulkopfs 4 aufgespult. In Fig. 5 ist dabei eine Ausführung dargestellt, bei der der Kautschukstreifen auf einen auf die Karkasse des Reifenrohlings aufgebauten Gürtel 23 bekannter Art aufgespult wird.

Es ist möglich, unterschiedliche Dicken des Laufstreifens und / oder der Seitenwand durch gesteuerte Änderung des Vorschubes des Spulkopfes entlang der zu bespulenden Reifenkontur und somit durch gezielte unterschiedliche Überlappung der einzelnen nebeneinander ausgebildeten Windungen des gespulten Streifenmaterials auszubilden.

Hierzu kann zusätzlich durch gezielte Veränderung des Ausrichtewinkels des Auflegebandes 5 bzw. des Auflegebandes 25 zur Oberfläche des Reifenrohlings durch gesteuertes Verdrehen der Welle 36 um ihre Achse und somit der Drehachse 32 der zweiten Umlenkrolle 32 die Konturierung und Dickenverteilung gesteuert beeinflusst werden.

Ebenso ist es möglich, den Laufstreifen bzw. die Seitenwand aus mehreren derartigen Kautschukstreifen aufzuspulen. Dabei können diese Kautschukstreifen bei Bedarf aus unterschiedlichem Kautschukmaterial und/oder unterschiedlich ausgeformt sein. Die unterschiedliche Ausformung erfolgt beispielsweise durch geänderte Kalanderwalzen 7 und 7 des Formkalanders.

In Figur 2 ist eine weitere Ausführungsform des Spulkopfs 4 mit Auflegeband 5 dargestellt Das Auflegeband 5 ist dabei ein um die erste Umlenkrolle 31 und um eine erste zweite Umlenkrolle 32 sowie um eine um eine zweite zweite Umlenkrolle 42 umlaufend geführtes endloses Förderband. Die Umlenkrolle 31 ist um eine Drehachse 37 drehbar im Gestell 4 gelagert und steht über einen nicht dargestellten Zahnradantrieb in bekannter Weise mit einem von der Steuereinheit 30 gesteuerten Antriebsmotor in Antriebsverbindung. Im Gestell 4 sind zwei stangenförmige Haltetraversen 39 befestigt, die sich jeweils in radialer Richtung der Umlenkrolle 31 außerhalb der Umlenkrolle 31 von der Umlenkrolle 31 wegweisend jedoch zu zwei gegenüberliegenden Seiten aus dem Gestell 4 heraus mit einer Neigung nach unten erstrecken. In dem von der Umlenkrolle 31 jeweils wegweisenden Ende der stangenförmigen Haltetraverse 39 ist in Verlängerung der stangenförmigen Haltetraverse 39 jeweils eine Welle 36 um ihre Drehachse drehbar gelagert. Mittels jeweils eines Verstellmechanismus 40 bekannter Art, der mit der Steuereinheit 30 in Verbindung steht kann die Welle 36 gesteuert um ihre Drehachse und zwar wahlweise in beide Drehrichtungen verdreht werden. Der Verstellmechanismus 40 ist beispielsweise ein Servomotor oder ein Schrittmotor mit Getriebe bekannter Art. An dem von der stangenförmigen Haltetraverse 39 wegweisenden Ende der Welle 36 ist die Welle 36 jeweils als Haltegabel 35 ausgebildet. In den beiden Schenkeln der einen Haltegabel 35 ist die erste zweite Umlenkrolle 32 um eine Drehachse 38 drehbar und in den beiden Schenkeln der anderen Haltegabel 35 ist die zweite zweite Umlenkrolle 42 um eine Drehachse 48 drehbar gelagert. Die Drehachse 38 liegt in einer zur Drehachse 37 der ersten Umlenkrolle 31 parallelen Ebene. Die Drehachse 48 liegt ebenfalls in einer zur Drehachse 37 der ersten Umlenkrolle 31 parallelen Ebene. Das Auflegeband 5 ist um die erste, um die erste zweite Umlenkrolle 32 und um die zweite zweite Umlenkrolle 42 herum geführt und erstreckt sich mit ihrem oberen Trumm zwischen erster zweiter Umlenkrolle 32, erster Umlenkrolle 31 und zweiter zweiter Umlenkrolle 42 und mit ihrem unteren Trumm wieder zurück zwischen zweiter zweiter Umlenkrolle 42, erster Umlenkrolle 31 und erster zweiter Umlenkrolle 32. Unterhalb der ersten Umlenkrolle 31 ist eine weitere außerhalb des Auflegebandes 5 auf das untere Trumm als Spannrolle einwirkende Umlenkrolle 34 um eine parallel zur Drehachse 37 der ersten Umlenkrolle ausgebildete Drehachse im Gestell 4 drehbar gelagert Durch Verdrehen der einen Welle 36 wird die Drehachse 33 der ersten zweiten Umlenkrolle 32 in deren zur Drehachse 37 der ersten Umlenkrolle 31 parallelen Ebene unter Einschluss eines Schnittwinkels zu dieser Ebene und durch Verdrehen der anderen Welle 36 wird die Drehachse 33 der zweiten zweiten Umlenkrolle 42 in deren zur Drehachse 37 der ersten Umlenkrolle 31 parallelen Ebene unter Einschluss eines Schnittwinkels zu dieser Ebene entsprechend verdreht.

Auch bei dieser Ausführung wird analog zur oben beschriebenen Vorgehensweise durch Wahl der Antriebsdrehrichtung der ersten Umlenkrolle 31 somit die Förderrichtung des oberen Trumms des Auflegebands 5 entweder in Richtung zur ersten zweiten Umlenkrolle 32 oder aber zur zweiten zweiten Umlenkrolle 42 gewählt. Auf diese Weise kann das ausgeformte Kautschukmaterial zum Auflegen gesteuert entweder zur einen Seite des Spulkopfs 4 oder aber zur anderen Seite des Spulkopfs 4 gefördert werden.

Bei der in Figur 1 dargestellten Aufbautrommel 2 wird bei dieser Ausführung beispielsweise das Kautschukmaterial, mit dem die rechte dargestellte Seite des Reifenrohlings bespult wird, über das obere Trumm des Auflegebandes 5 über die erste zweite Umlenkrolle 32 bespult. Dabei befindet sich der Spulkopf in einer Position rechts vom Reifenrohling. Zur Bespulung der links dargestellten Seite wird der Spulkopf in eine Position links vom Reifenrohling positioniert. Die linke dargestellte Seite des Reifenrohlings wird dann bei entgegen gesetzter Drehrichtung der angetriebenen ersten Umlenkrolle 31 über das obere Trumm des Auflegebandes 5 und über die zweite zweite Umlenkrolle 42 bespult.

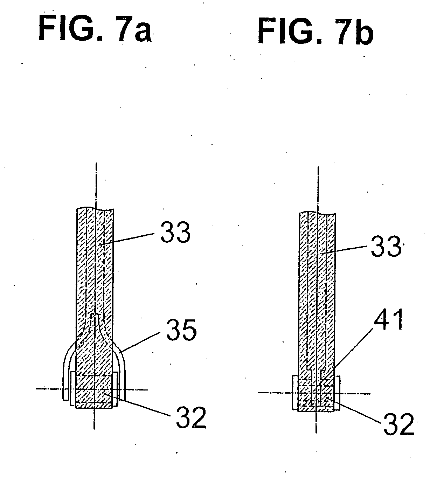

Anstelle der in Fig. 3a bis Fig. 3d sowie in Fig. 7a dargestellten Ausbildung, bei der die zweite Umlenkrolle 32 bzw. 42 in dem als Haltegabel 35 ausgebildeten Ende der Welle 36 gelagert ist, ist in einer anderen - in Fig. 7b dargestellten - Ausführung das Ende der Welle 36 nicht als Haltegabel 35 sondern als Platte mit einer Durchgangsbohrung und einem in der Durchgangsbohrung befestigten Bolzen ausgebildet ist, der sich beiderseits der Platte aus der Durchgangsbohrung heraus erstreckt und dort jeweils als Lagerzapfen ausgebildet ist. Auf dem Lagerzapfen ist konzentrisch zueinander beiderseits der Platte jeweils eine Umlenkrolle 42 drehbar gelagert. Diese beiden Umlenkrollen 42 bilden als Paar jeweils eine oben angesprochene zweite Umlenkrolle 32 bzw. 42.

### Bezugszeichenliste

### (Teil der Beschreibung)

- 1: Gestell
- 2: Reifenaufbautrommel
- 3: Karkasse
- 4: Spulkopf
- 5: Auflegeband
- 6: Formkalander
- 7: Kalanderwalze
- 8: Kalanderwalze
- 9: Schneideeinrichtung
- 10: Hubkolbenmesser
- 11: Hubkolbenmesser
- 12: Zufiihreinrichtung
- 13: Rahmen
- 14: Hubkolben
- 15: Hubkolben
- 16: Halteplatte
- 17: Halteplatte
- 18: Träger
- 19: Führungsrolle
- 20: Kautschukband
- 21: Extruder
- 22: Wulstbereich
- 23: Gürtellagen
- 24: Kautschukband
- 25: Auflegeband
- 30: Steuereinheit
- 31: erste Umlenkrolle
- 32: zweite Umlenkrolle
- 33: Fördertisch
- 34: Umlenkrolle
- 35: verdrehbare Gabel
- 36: Welle
- 37: Drehachse
- 38: Drehachse
- 39: Haltestange
- 40: Verdrehmechanismus
- 41: Lagerbuchse
- 42: Umlenkrolle

## Patentansprüche

1. Vorrichtung (4) zum Zuführen und Andrücken von bandförmigem oder streifenförmigern profiliertem Kautschukmaterial zu einem um einen rotatorisch antreibbaren Aufbaukörper (2) zum Aufbau einer Reifenaufbauschicht auf dem Aufbaukörper (2), mit einer Ausformungseinrichtung (6) zur Profilierung des durch die Ausformungseinrichtung (6) geförderten Kautschukmaterials und mit einem der Ausformungseinrichtung (6) in Förderrichtung des profilierten Kautschukmaterials nachgeordneten um einen ersten um eine Drehachse (37) drehbar gelagerten - insbesondere rotationssymetrischen - Umlenkkörper (31) und um einen um einen zweiten um eine Drehachse (38) drehbar gelagerten - insbesondere rotationssymetrischen - Umlenkkörper (32) umlaufend geführten Endlosband (5) zur Förderung des profilierten Kautschukmaterials aus Richtung des ersten Umlenkkörpers (31) in Richtung des zweiten Umlenkkörpers (32) und zum Auflegen und zum Andrücken auf den rotatorisch antreibbaren Aufbaukörper (2) im Umlenkbereich des zweiten Umlenkkörpers (31), wobei die Drehachse (38) des zweiten Umlenkkörpers (32) in ihrer Ausrichtung gegenüber der Drehachse (37) des ersten Umlenkkörpers (31) gesteuert veränderbar ausgebildet ist.

2. Vorrichtung gemäß den Merkmalen von Anspruch 1,
wobei das umlaufend geführte Endlosband (5) zwischen erster und zweiter Umlenkrolle ein oberes und ein unteres Trumm aufweist, wobei das obere Trumm als Fördertrumm zur Förderung des profilierten Kautschukmaterials zum zweiten Umlenkkörper (32) und zum Aufbaukörper (2) ausgebildet ist.

3. Vorrichtung gemäß den Merkmalen von Anspruch 2,
wobei die Ausformeinrichtung (6) oberhalb des umlaufend ausgebildeten Endlosbandes (5) ausgebildet ist.

4. Vorrichtung gemäß den Merkmalen von einem oder mehreren der vorangegangenen Ansprüche,
mit einer steuerbaren Antriebseinheit und mit einer zumindest zur Förderung herstellbaren Antriebsverbindung zwischen Antriebseinheit und erstem Umlenkkörper (31) zum gesteuerten Verdrehen des ersten Umlenkkörpers (31) um seine Achse (37) zum Antreiben des umlaufenden Endlosbandes (5) um die beiden Umlenkkörper (31,32) über Mitnahmekontakt zwischen erstem Umlenkkörper (31) und umlaufendem Endlosband (5).

5. Vorrichtung gemäß den Merkmalen von einem oder mehreren der vorangegangenen Ansprüche,
wobei zum wahlweisen Zuführen und Andrücken von bandförmigem oder streifenförmigem profiliertem Kautschukmaterial von unterschiedlichen Seiten zu einem oder mehreren jeweils um einen rotatorisch antreibbaren Aufbaukörper zum Aufbau jeweils einer Reifenaufbauschicht auf dem Aufbaukörper das umlaufende Endlosband (5) mit seiner Förderfläche von dem ersten Umlenkkörper (31) in Richtung eines in einer ersten Förderrichtung angeordneten zweiten Umlenkkörpers oder in Richtung eines in einer zweiten Förderrichtung angeordneten zweiten Umlenkkörpers gesteuert antreibbar ausgebildet ist.

6. Vorrichtung gemäß den Merkmalen von Anspruch 5,
wobei zum wahlweisen Zuführen und Andrücken von bandförmigem oder streifenförmigem profiliertem Kautschukmaterial von unterschiedlichen Seiten zu einem oder mehreren jeweils um einen rotatorisch antreibbaren Aufbaukörper zum Aufbau jeweils einer Reifenaufbauschicht auf dem Aufbaukörper der zweite Umlenkkörper aus einer ersten Position zum Zuführen und Andrücken von bandförmigem streifenförmigem profiliertem Kautschukmaterial von einer ersten Seite in eine zweite Position zum Zuführen und Andrücken von bandförmigem streifenförmigem profiliertem Kautschukmaterial von einer zweiten Seite und zurück - insbesondere gesteuert - verstellbar ist.

7. Vorrichtung gemäß den Merkmalen von Anspruch 5,
wobei zum wahlweisen Zuführen und Andrücken von bandförmigem oder streifenförmigem profiliertem Kautschukmaterial von unterschiedlichen Seiten zu einem oder zu mehreren jeweils um einen rotatorisch antreibbaren Aufbaukörper zum Aufbau jeweils einer Reifenaufbauschicht auf dem Aufbaukörper ein erster zweiter Umlenkkörper (32) in einer Position zum Zuführen und Andrücken von bandförmigem streifenförmigem profiliertem Kautschukmaterial von einer ersten Seite und ein zweiter zweiter Umlenkkörper (42) in einer Position zum Zuführen und Andrücken von bandförmigem streifenförmigem profiliertem Kautschukmaterial von einer zweiten Seite drehbar gelagert und jeweils in seiner Drehachse gegenüber der Drehachse des ersten Umlenkkörpers veränderbar ausgebildet ist, wobei das umlaufende Enlosband (5) um den ersten Umlenkkörper (31) und sowohl um den ersten zweiten (32) als auch um den zweiten zweiten Umlenkkörper (42) geführt ausgebildet ist.

8. Vorrichtung gemäß den Merkmalen von einem oder mehreren der vorangegangenen Ansprüche,
wobei die Ausformeinrichtung (6) ein Formkalander ist.

9. Vorrichtung gemäß den Merkmalen von einem oder mehreren der vorangegangenen Ansprüche,
wobei der Ausformeinrichtung (6) in Förderrichtung vorgeordnet eine Herstellungseinrichtung -insbesondere eine Extrudereinrichtung - zur Erzeugung von bandförmigem Kautschukmaterial vorgeordnet ist.

10. Vorrichtung gemäß den Merkmalen von einem oder mehreren der vorangegangenen Ansprüche,
wobei der Ausformeinrichtung (6) in Förderrichtung vorgeordnet eine steuerbare Ablängeinrichtung (9) zur gesteuerten Ablängung der zum Auflegen erforderlichen Band- oder Streifenlängen des Kautschukmaterials ausgebildet ist.

11. Vorrichtung gemäß den Merkmalen von einem oder mehreren der vorangegangenen Ansprüche,
mit Mitteln zum gesteuerten Heranführen - insbesondere durch Verschieben- der Vorrichtung in eine Betriebsposition am Aufbaukörper und zum gesteuerten Entfernen - insbesondere durch Verschieben - der Vorrichtung aus der Betriebsposition in eine Ruheposition entfernt vom Aufbaukörper.

## Claims

1. Apparatus (4) for supplying and pressing profiled rubber material in band or strip form to a building element (2) which can be rotationally driven, for building up a tyre building layer on the building element (2), with a shaping device (6) for profiling the rubber material conveyed through the shaping device (6) and with an endless belt (5), arranged downstream of the shaping device (6) in the conveying direction of the profiled rubber material and guided in a circulating manner around a first deflecting element (31) mounted rotatably about an axis of rotation (37) - in particular a rotationally symmetrical deflecting element (31) - and around a second deflecting element (32) mounted rotatably about an axis of rotation (38) - in particular a rotationally symmetrical deflecting element (32), for conveying the profiled rubber material from the direction of the first deflecting element (31) in the direction of the second deflecting element (32) and for depositing and pressing it onto the rotationally drivable building element (2) in the deflecting region of the second deflecting element (32), the axis of rotation (38) of the second deflecting element (32) being formed such that it can be changed in a controlled manner with respect to the axis of rotation (37) of the first deflecting element (31).

2. Apparatus according to the features of Claim 1,
the endless belt (5) that is guided in a circulating manner having an upper strand and a lower strand between the first deflecting roller and the second deflecting roller, the upper strand being formed as a conveying strand for conveying the profiled rubber material to the second deflecting element (32) and to the building element (2).

3. Apparatus according to the features of Claim 2,
the shaping device (6) being formed above the endless belt (5) that is formed in a circulating manner.

4. Apparatus according to the features of one or more of the preceding claims,
with a controllable drive unit and with a drive connection, which can be established at least for conveying, between the drive unit and the first deflecting element (31), for turning the first deflecting element (31) about its axis (37) in a controlled manner for driving the circulating endless belt (5) around the two deflecting elements (31, 32) by means of driving contact between the first deflecting element (31) and the circulating endless belt (5).

5. Apparatus according to the features of one or more of the preceding claims,
therein, for supplying and pressing profiled rubber material in band or strip form from different sides, according to choice, to one or more building elements which can each be rotationally driven, for building up in each case a tyre building layer on the building element, the circulating endless belt (5) is formed such that it can be driven in a controlled manner with its conveying surface from the first deflecting element (31) in the direction of a second deflecting element, arranged in a first conveying direction, or in the direction of a second deflecting element, arranged in a second conveying direction.

6. Apparatus according to the features of Claim 5, wherein, for supplying and pressing profiled rubber material in band or strip form from different sides, according to choice, to one or more building elements which can each be rotationally driven, for building up in each case a tyre building layer on the building element, the second deflecting element can be adjusted - in particular in a controlled manner - from a first position for supplying and pressing profiled rubber material in band or strip form from a first side into a second position for supplying and pressing profiled rubber material in band or strip form from a second side, and back.

7. Apparatus according to the features of Claim 5, wherein, for supplying and pressing profiled rubber material in band or strip form from different sides, according to choice, to one or more building elements which can be rotationally driven, for building up in each case a tyre building layer on the building element, a first second deflecting element (32) is rotatably mounted in a position for supplying and pressing profiled rubber material in band or strip form from a first side and a second second deflecting element (42) is rotatably mounted in a position for supplying and pressing profiled rubber material in band or strip form from a second side, and said second deflecting elements are respectively formed such that they can be changed in their axis of rotation with respect to the axis of rotation of the first deflecting element, the circulating endless belt (5) being formed such that it is guided around the first deflecting element (31) and both around the first second deflecting element (32) and around the second second deflecting element (42).

8. Apparatus according to the features of one or more of the preceding claims,
the shaping device (6) being a moulding calender.

9. Apparatus according to the features of one or more of the preceding claims,
the shaping device (6) being preceded in the conveying direction by a producing device - in particular an extruder device - for producing rubber material in band form.

10. Apparatus according to the features of one or more of the preceding claims,
the shaping device (6) being preceded in the conveying direction by a controllable cutting-to-length device (9) for the controlled cutting to length of the band or strip lengths of the rubber material that are required for depositing.

11. Apparatus according to the features of one or more of the preceding claims,
with means for bringing the apparatus in a controlled manner - in particular by displacement - into an operating position at the building element and for removing the apparatus in a controlled manner - in particular by displacement - from the operating position into a rest position away from the building element.

## Revendications

1. Dispositif (4) destiné à amener et repousser du matériau de caoutchouc profilé, en forme de bande ou en forme de ruban, sur un corps de montage (2) entraîné en rotation en vue de former une couche de montage de bandage de roue sur le corps d'un montage (2),
le dispositif présentant un système de façonnage (6) qui profile le matériau de caoutchouc transporté dans le système de façonnage (6) et une bande sans fin (5) disposée en aval du système de façonnage (6) dans la direction de transport du matériau de caoutchouc profilé, guidée en circuit fermé autour d'un premier corps de renvoi (31) qui est en particulier symétrique en rotation et qui est monté à rotation autour d'un axe de rotation (37), et autour d'un deuxième corps de renvoi (32) qui est en particulier symétrique en rotation et qui est monté à rotation autour d'un axe de rotation (38), pour transporter le matériau de caoutchouc profilé depuis la direction du premier corps de renvoi (31) jusque dans la direction du deuxième corps de renvoi (32) ainsi que pour le placer et le repousser sur le corps de montage (2) entraîné en rotation dans la partie de renvoi du deuxième corps de renvoi (32), l'orientation de l'axe de rotation (38) du deuxième corps de renvoi (32) par rapport à l'axe de rotation (37) du premier corps de renvoi (31) pouvant être modifiée de manière contrôlée.

2. Dispositif selon les caractéristiques de la revendication 1, dans lequel la bande sans fin (5) circulant en boucle fermée entre un premier et un deuxième rouleau de renvoi présente un brin supérieur et un brin inférieur, le brin supérieur étant configuré comme brin de transport qui transporte le matériau de caoutchouc profilé en direction du deuxième corps de renvoi (32) et du corps de montage (2).

3. Dispositif selon les caractéristiques de la revendication 2, dans lequel le système de façonnage (6) est formé au-dessus de la bande sans fin (5) circulant en boucle fermée.

4. Dispositif selon les caractéristiques d'une ou plusieurs des revendications précédentes, présentant une unité d'entraînement asservie et entre l'unité d'entraînement et le premier corps de renvoi (31) une liaison d'entraînement qui peut être établie au moins en vue du transport pour faire tourner de manière contrôlée le premier corps de renvoi (31) autour de son axe (37) en vue d'entraîner la bande sans fin (5) circulant en boucle fermée autour des deux corps de renvoi (31, 32) par un contact d'entraînement entre le premier corps de renvoi (31) et la bande sans fin (5) circulant en boucle fermée.

5. Dispositif selon les caractéristiques d'une ou plusieurs des revendications précédentes, dans lequel pour amener et repousser de manière sélective le matériau de caoutchouc profilé en forme de bande ou en forme de ruban par différents côtés vers un ou plusieurs corps de montage qui peuvent être entraînés en rotation pour monter une couche de montage de bandage de roue sur le corps de montage, la bande sans fin (5) circulant en boucle fermée est configurée de manière à pouvoir être entraînée de manière contrôlée par sa surface de transport depuis le premier corps de renvoi (31) et en direction d'un deuxième corps de renvoi disposé dans une première direction de transport ou en direction d'un deuxième corps de renvoi disposé dans une deuxième direction de transport.

6. Dispositif selon les caractéristiques de la revendication 5, dans lequel pour amener et repousser sélectivement du matériau de caoutchouc profilé en forme de bande ou en forme de ruban par différents côtés vers un ou plusieurs corps de montage, chacun entraîné en rotation, pour monter une couche de montage de bandage de roue sur le corps de montage, le deuxième corps de renvoi peut être déplacé, en particulier de manière contrôlée, d'une première position d'amenée et de poussée du matériau de caoutchouc profilé en forme de bande ou en forme de ruban par un premier côté jusque dans une deuxième position d'amenée et de poussée du matériau de caoutchouc profilé en forme de bande ou en forme de ruban par un deuxième côté et inversement.

7. Dispositif selon les caractéristiques de la revendication 5, dans lequel pour amener et repousser sélectivement du matériau de caoutchouc profilé en forme de bande ou en forme de ruban par différents côtés vers un ou plusieurs corps de montage, chacun entraîné en rotation, pour monter une couche de montage de bandage de roue sur le corps de montage, un premier deuxième corps de renvoi (32) est monté à rotation dans une position d'amenée et de poussée du matériau de caoutchouc profilé en forme de bande ou en forme de ruban par un premier côté et un deuxième corps de renvoi (42) est monté à rotation dans une position d'amenée et de poussée du matériau de caoutchouc profilé en forme de bande ou en forme de ruban par un deuxième côté, ces corps de renvoi étant tous deux configurés de telle sorte que leur axe de rotation puisse être modifié par rapport à l'axe de rotation du premier corps de renvoi, la bande sans fin (5) circulant en boucle fermée étant guidée autour du premier corps de renvoi (31) et à la fois autour du premier deuxième corps de renvoi (32) et autour du deuxième corps de renvoi (42).

8. Dispositif selon les caractéristiques d'une ou plusieurs des revendications précédentes, dans lequel le système de façonnage (6) est une calandre de façonnage.

9. Dispositif selon les caractéristiques d'une ou plusieurs des revendications précédentes, dans lequel le système de façonnage (6) précède dans la direction de transport un système de fabrication, en particulier un système d'extrusion, qui produit le matériau de caoutchouc en forme de bande.

10. Dispositif selon les caractéristiques d'une ou plusieurs des revendications précédentes, dans lequel le système de façonnage (6) précède dans la direction de transport un système (9) de découpe à longueur qui découpe en longueurs contrôlées les tronçons de bande ou de ruban de matériau de caoutchouc qui doivent être placés.

11. Dispositif selon les caractéristiques d'une ou plusieurs des revendications précédentes, présentant des moyens d'amenée contrôlée, en particulier par translation, du dispositif dans une position de fonctionnement sur le corps de montage et d'éloignement contrôlé, en particulier par translation, du dispositif depuis la position de fonctionnement jusque dans une position de repos située à distance du corps de montage.
